Europäisches Patentamt

European Patent Office

Office européen des brevets

(11) Numéro de publication: **0 183 592**

**A1**

## (12) DEMANDE DE BREVET EUROPEEN

(21) Numéro de dépôt: **85402159.9**

(22) Date de dépôt: **08.11.85**

(51) Int. Cl.⁴: **H 04 L 11/20**

(30) Priorité: **08.11.84 FR 8416991**

(43) Date de publication de la demande:
**04.06.86 Bulletin 86/23**

(84) Etats contractants désignés:
**BE DE GB IT NL SE**

(71) Demandeur: **LABORATOIRE CENTRAL DE
TELECOMMUNICATIONS Société anonyme:
18-20, rue Grange-Dame-Rose
F-78140 Velizy Villacoublay(FR)**

(72) Inventeur: **Dejean, Jacques Henri
59 allée de la Pointe Genète
F-91190 Gif-Sur-Yvette(FR)**

(72) Inventeur: **Henrion, Michel André Robert
133 rue de Silly
F-92100 Boulogne Billancourt(FR)**

(72) Inventeur: **Orighoni, Jean-Claude Lucien Arthur
6 Villa de la Gare
F-92140 Clamart(FR)**

(74) Mandataire: **Grandry, Pierre Léon
L.C.T. 18-20, rue Grange-Dame-Rose, B.P. 40
F-78140 Vélizy-VillacoublayCedex(FR)**

(54) **Commutateur de paquets asynchrone.**

㊗ L'invention concèrne un commutateur de paquets asynchrone.

Dans ce commutateur, le paquet entrant est reçu par des groupes de circuits entrants (GCE) et transmis à des groupes de mémoires paquets (GMP) permettant le stockage en mémoire du paquet dès le début de réception, l'analyse de l'en-tête dudit paquet pendant la réception et l'envoi de ses caractéristiques aux groupes de circuits sortants (GCS) dès la fin de réception. L'envoi du paquet sur un circuit sortant (CS) se fait, à travers un réseau de transfert de paquets (RTP) de trois étages spatiaux (SSS), dès la fin d'envoi du paquet précédent, le chemin dans le réseau de transfert de paquets étant connecté avant la fin du paquet précédent.

L'invention s'applique en particulier aux autocommutateurs de paquets de réseaux multiservices comprenant de la vidéocommunication.

FIG. 1

1

## COMMUTATEUR DE PAQUETS ASYNCHRONE

La présente invention concerne un commutateur de paquets asynchrone.

Le commutateur décrit, destiné à être utilisé dans un réseau à commutation de paquets, gère des paquets comportant un en-tête où est indiquée la destination finale du paquet. Un tel type de commutateur est décrit, par exemple, dans le brevet français n° 80 06210 (2 478 911) déposé le 20 mars 1980 par la demanderesse.

Le commutateur décrit dans ce brevet comporte des moyens pour lire l'en-tête du paquet et des moyens pour déterminer, à partir de tables d'acheminement, la sortie du commutateur vers laquelle le paquet doit être envoyé. Il comporte un premier étage de présélection spatiale permettant à des sections d'interface entrantes d'accéder à un deuxième étage temporel composé de groupes de cellules de mémoire de la taille d'un paquet. Les sorties des cellules de mémoire sont reliées aux sections d'interface sortantes par l'intermédiaire d'un troisième étage de brassage spatial et d'un quatrième étage spatial de sélection finale. Les avantages d'un tel commutateur sont une grande souplesse d'adaptation, une grande résistance aux défaillances partielles des éléments du commutateur et, au niveau du réseau, une faible vulnérabilité à la défaillance d'un commutateur et la possibilité d'une égalisation dynamique de la charge des artères de transmission.

Cependant, les performances obtenues sont limitées, en particulier, par le temps nécessaire pour attribuer une cellule de mémoire libre aux sections entrantes et par le temps de transfert des paquets dans les sections d'interface et les solutions proposées dans la demande de certificat d'addition français n° 81 17617 (2 513 472), déposée le 18 septembre 1981 par la demanderesse, permettent seulement de reculer un peu ces limites.

La présente invention a pour objet un commutateur de paquets asynchrone permettant de remédier à ces inconvénients et de pousser les technologies utilisables aux limites de leurs possibilités.

Dans la présente invention, on décrit un commutateur pour réseau multiservice englobant la vidéocommunication et pouvant, grâce à des mémoires identiques normalisées, transmettre des paquets de taille importante pour des liaisons à débit élevé. Ce commutateur peut, de plus, commuter un grand nombre de paquets en parallèle grâce à un réseau de transfert de paquets à grande puissance de marquage. Enfin, pour diminuer la réduction de puissance de transfert due au temps d'accès aux mémoires, le commutateur prévoit une étape de réception du paquet dans la mémoire et une étape d'émission du paquet sur la ligne de sortie choisie, les deux étapes se faisant de façon asynchrone suivant l'état des différents étages du commutateur.

Selon l'invention, la structure du commutateur, spatiale-temporelle-spatiale, permet le stockage du paquet entrant dans un parmi deux sous-groupes de t mémoires, t étant un entier naturel, et ce, dès le début de réception du paquet entrant. L'en-tête du paquet est analysé durant la mise en mémoire et les caractéristiques dudit paquet sont envoyées au circuit de sortie choisi. Dès qu'il le peut, le circuit de sortie demande une connexion de chemin dans le réseau de transfert de paquets avant la fin de transmission du paquet précédent et envoie la demande de paquet dès la fin de transmission du paquet précédent. Des signaux de commande directe, comme maintien des points de croisement des matrices, début, fin prochaine, fin de paquet et demande d'envoi de paquet, sont transmis par des plans parallèles à ceux du réseau de transfert de paquets.

L'invention sera mieux comprise et d'autres caractéristiques et avantages apparaîtront à l'aide de la description ci-après et des dessins joints où :

- la figure 1 est le schéma général du commutateur selon l'invention ;

- la figure 2 est le schéma de la structure spatiale-temporelle-spatiale du commutateur ;

- la figure 3 est le schéma des groupes de circuits entrants des lignes ;

- la figure 4 est le schéma des groupes de mémoires paquets ;

- la figure 5 est le schéma des groupes de circuits sortants ;

- la figure 6 est le schéma d'un circuit de commande d'un circuit sortant de ligne ;

- les figures 7.a à 7.d représentent les différents plans du réseau de transfert de paquets ;

- les figures 8.a à 8.d représentent le déroulement de la réception d'un paquet entrant ;

- la figure 9 est le schéma du marqueur chargé de trouver un chemin dans le réseau de transfert de paquets ;

- la figure 10 est le schéma des modules de recherche de chemin ;

- la figure 11 est le schéma d'un circuit de recherche de chemin ;

- la figure 12 est le schéma d'un circuit de gestion des points de croisement ;

- la figure 13 représente les différents bus optiques utilisés dans le commutateur ;

- la figure 14 représente le détail des bus optiques allant des groupes de mémoires paquets aux groupes de circuits sortants ;

- la figure 15 représente le détail des bus optiques allant des groupes de circuits sortants de ligne aux groupes de mémoires paquets ; et

- la figure 16 représente le détail des bus optiques reliant le marqueur chargé de trouver un chemin au réseau de transfert de paquets.

Pour alléger la description, on n'utilise pas systématiquement les indices numériques des circuits ou ensembles et, lorsque l'on parle de manière générale de tous les circuits d'un même type, on les désigne seulement par les lettres de références. Ainsi, on parle en général des groupes de circuits entrants GCE et non des groupes de circuits entrants GCE0 à GCE31.

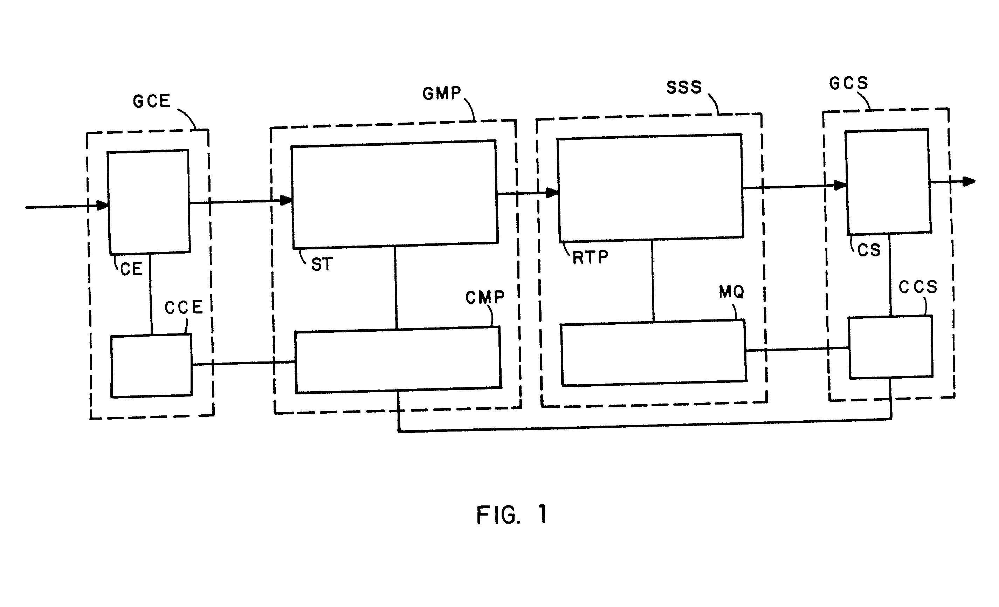

Sur la figure 1, sont représentées les différentes parties principales du commutateur de paquets selon l'invention, composé de groupes de circuits entrants GCE, de groupes de mémoires paquets GMP, de trois étages de commutation spatiaux SSS et de groupes de circuits sortants GCS. Les paquets entrants sont transmis par un circuit entrant CE, commandé par un circuit de commande de circuit entrant CCE, à un étage spatio-temporel ST, lui-même commandé par un circuit de commande de mémoires paquets CMP qui échange des informations avec les circuits de commande de circuit entrant CCE et les circuits de commande de circuit sortant CCS. Ces paquets sont transmis au circuit sortant CS à travers un réseau de transfert de paquets RTP composé de plusieurs plans de matrices de transfert, ces derniers étant commandés par un marqueur MQ échangeant des informations avec le circuit de commande de circuit sortant CCS.

On va donner maintenant les grandes options de commande du commutateur à l'aide de la figure 1 pour suivre plus aisément la description détaillée ultérieure.

Un circuit entrant CE, qui reçoit un paquet entrant, l'aiguille vers un groupe de mémoires paquets GMP, grâce au circuit de commande de circuit entrant CCE. Le paquet entrant est envoyé dans un parmi deux sous-groupes de mémoires paquets, selon l'enchaînement des paquets entrants, soit alternativement soit en fonction des disponibilités de ces sous-groupes de mémoires paquets. Le groupe de mémoires paquets GMP, comporte un étage spatial qui envoie le paquet entrant dans une mémoire paquet de l'étage temporel grâce au circuit de commande de mémoires paquets CMP. Ce circuit de commande de mémoires paquets CMP reçoit du groupe de circuits entrants GCE les demandes de mémoires paquets et lui envoie les informations de disponibilité des sous-groupes de mémoires paquets. Dès la fin de stockage du préfixe de paquet entrant dans la mémoire paquet, le circuit sortant CS, que doit emprunter le paquet, est déterminé par le circuit de commande de mémoires paquets CMP, en fonction de son état de charge envoyé par le circuit de commande de circuit sortant CCS, et d'une table d'acheminement. Dès la fin de stockage du paquet entrant, les caractéristiques du paquet sont envoyées par le même circuit de commande de mémoires paquets CMP au circuit de commande de circuit sortant CCS choisi. Dès que le circuit de commande de mémoires paquets CMP lui envoie un signal de fin prochaine de paquet sortant précédent, le circuit de commande de circuit sortant CCS demande au marqueur MQ de lui connecter un chemin dans le réseau de paquets RTP à partir de la mémoire paquet contenant le paquet. Le marqueur MQ, à grande puissance de marquage, détermine le chemin, avant l'arrivée au circuit de commande de circuit sortant CCS, du signal de fin de paquet sortant précédent. Dès réception de ce signal, le circuit de commande de circuit sortant CCS demande au circuit de commande de mémoires paquets CMP l'envoi du paquet au circuit sortant CS. Ceci permet de diminuer de manière notable le temps mort existant entre deux paquets envoyés sur la même ligne sortante LE.

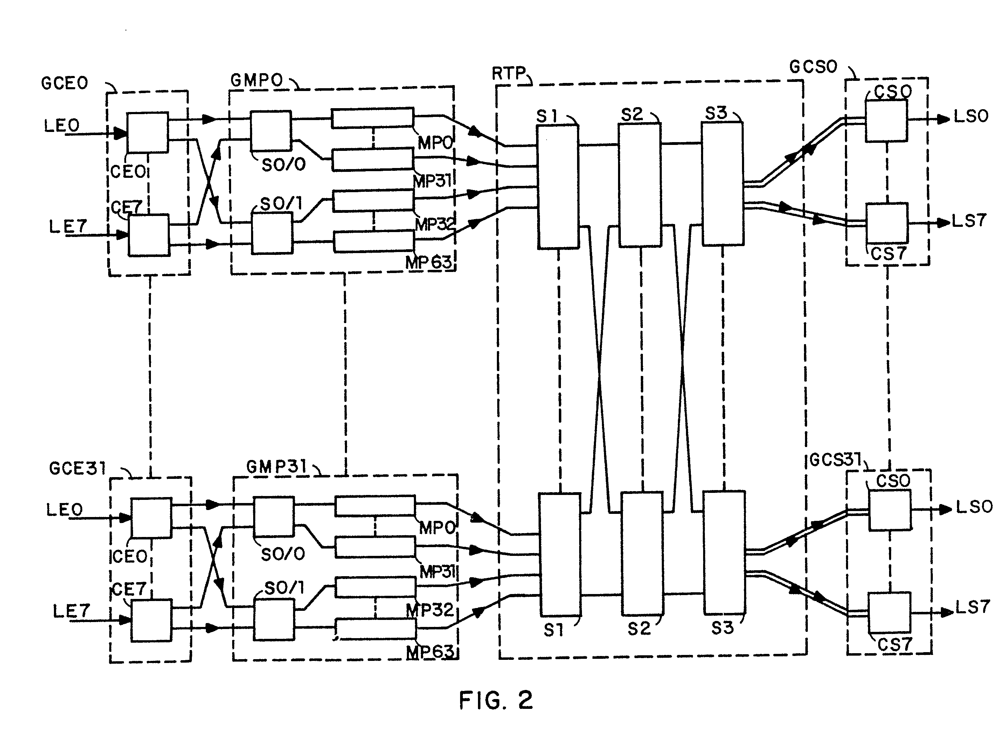

La figure 2 montre la structure plus détaillée des circuits de transmission des paquets dans laquelle on trouve, à titre d'exemple, deux cent cinquante-six lignes entrantes LE réparties par groupes de huit sur trente-deux groupes de circuits entrants GCE0 à GCE31. A l'intérieur des groupes de circuits entrants GCE, chaque ligne entrante, LE0 à LE7, passe par un des circuits entrants CE0 à CE7 qui dirige les paquets entrants vers une parmi deux matrices de transfert S0/0 et S0/1, dont les huit entrées sont reliées chacune à une des deux sorties de chaque circuit entrant CE0 à CE7, et dont les sorties sont au nombre de trente-deux. Ces matrices de transfert représentent un premier étage spatial et ont leurs sorties connectées chacune à une mémoire de paquets, formant ainsi deux sous-groupes de trente-deux mémoires paquets MP0 à MP31 et MP32 à MP63. Les soixante-quatre mémoires, associées à chaque groupe de circuits entrants et formant l'étage temporel, constituent les groupes de mémoires paquets GMP0 à GMP31 dont le nombre est le même que celui des groupes de circuits entrants GCE. Chacun des trente-deux groupes de mémoires paquets GMP est relié à une matrice de transfert à soixante-quatre entrées et trente-deux sorties, formant un premier étage spatial S1 du réseau de transfert de paquets RTP. Un second étage spatial S2 du réseau de transfert de paquets RTP est formé de matrices de transfert à trente-deux entrées, reliées chacune à une sortie de chaque matrice du premier étage spatial S1, et à trente-deux sorties, reliées chacune à une entrée de chaque matrice de transfert d'un troisième étage spatial S3. Ce troisième étage spatial S3, formé de trente-deux matrices de transfert à seize sorties, permet de connecter trente-deux groupes de circuits sortants GCS0 à GCS31 de huit circuits sortants CS0 à CS7 à deux entrées, chacun de ces circuits sortants CS servant une ligne sortante, LS0 à LS7.

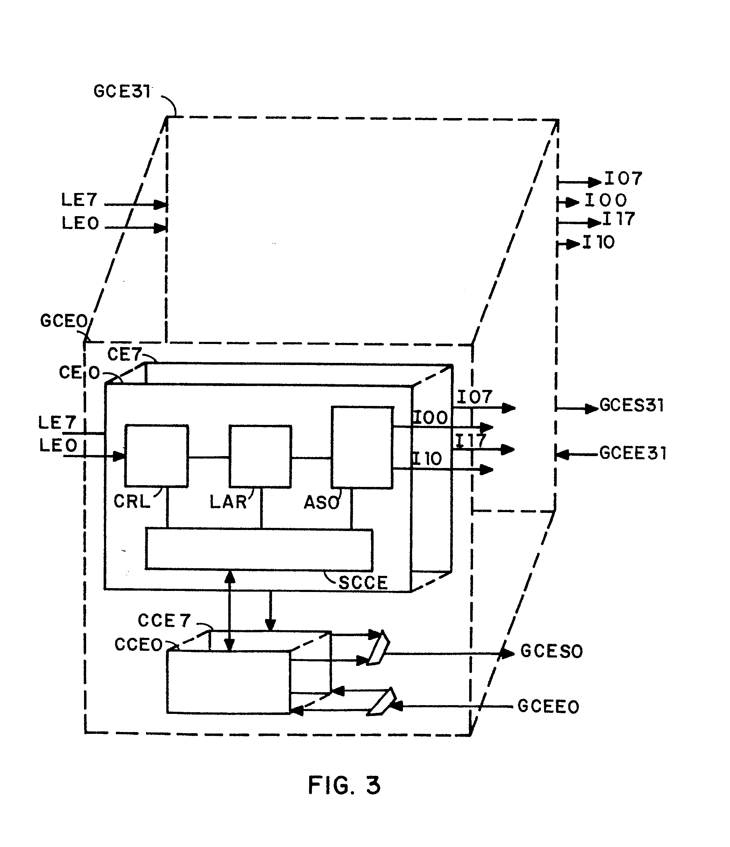

Les trente-deux groupes de circuits entrants GCE0 à GCE31, représentés sur la figure 3, sont composés chacun de huit circuits entrants CE0 à CE7 commandés chacun par un circuit de commande de circuit entrant, CCE0 à CCE7. Chaque circuit entrant CE accueille une ligne entrante LE par un circuit de réception de ligne CRL, puis transmet les paquets à une ligne à retard LAR placée à l'entrée d'un commutateur d'accès AS0 dirigeant les paquets vers deux sorties, paire et impaire,

possibles, I00 à I07 et, I10 à I17. Ces trois circuits sont connectés à un circuit de supervision et de contrôle de circuit entrant SCCE relié lui-même au circuit de commande de circuit entrant CCE.

Les huit circuits de commande de circuit entrant CCE0 à CCE7 sont reliés d'une part aux entrées d'un multiplexeur dont la sortie, GCES0 à GCES31, de chaque groupe de circuits entrants GCE0 à GCE31 est reliée respectivement à un des groupes de mémoires paquets GMP0 à GMP31, et d'autre part aux sorties d'un démultiplexeur dont l'entrée, GCEE0 à GCEE31, de chaque groupe de circuits entrants GCE0 à GCE31, provient respectivement d'un des groupes de mémoires paquets GMP0 à GMP31.

Ainsi, le circuit de réception de ligne CRL réalise l'interface avec la ligne entrante LE, procède au décodage du signal en ligne et transfère, en les validant, les bits utiles reçus à la ligne à retard numérique LAR. Cette ligne à retard numérique LAR introduit un retard et joue un rôle de registre tampon. Le circuit de supervision et de contrôle de circuit entrant SCCE envoie des signaux de début et fin de réception de paquets au circuit de commande de circuit entrant CCE et commande le commutateur AS0. Le circuit de commande de circuit entrant CCE présélectionne la position du commutateur d'accès AS0 en fonction de la position précédente, et, lorsque le flot de paquets arrivant n'est pas trop important, de l'occupation des sous-groupes de mémoires paquets MP correspondants. De plus, il demande au groupe de mémoires paquets GMP, par la sortie GCES du multiplexeur, une mémoire paquet MP dès le début de réception d'un paquet dans le circuit de réception de ligne CRL ; le temps de retard de la ligne à retard LAR donne au commutateur d'accès AS0 le délai de réaction nécessaire à son basculement. L'entrée GCEE du démultiplexeur fournit au circuit de commande de circuit entrant CCE l'état d'occupation des sous-groupes de mémoires paquets MP. Le déroulement de la réception du paquet est décrit plus loin.

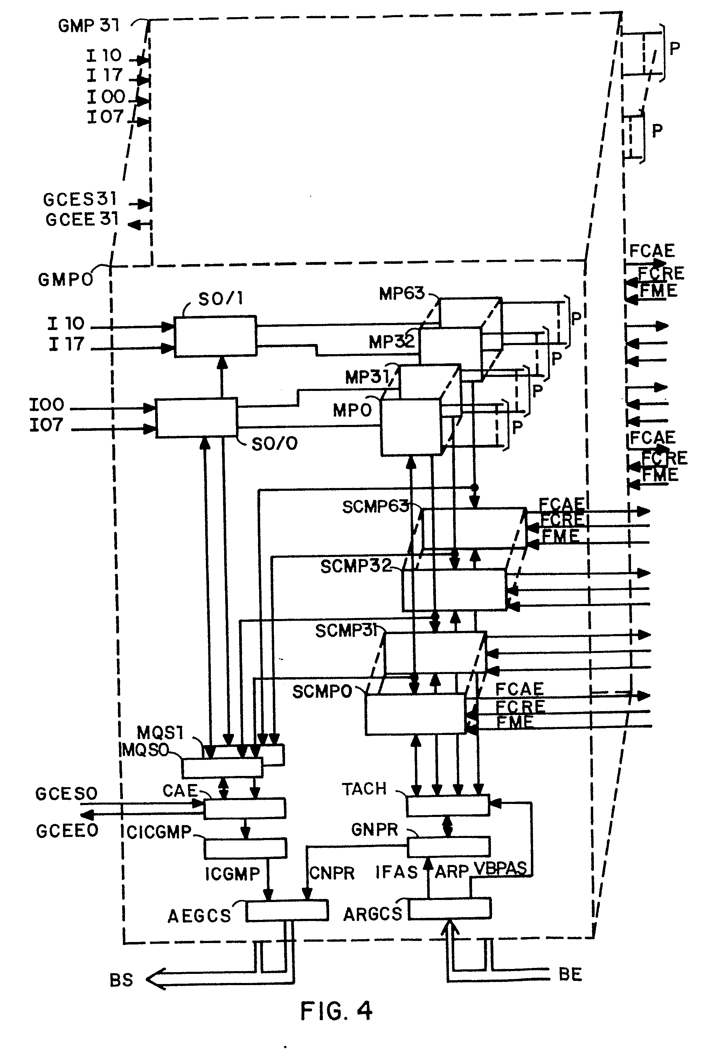

Sur la figure 4 sont représentés les trente-deux groupes de mémoires paquets GMP0 à GMP31 qui accueillent chacun sur deux matrices de transfert S0/0 et S0/1, les huit sorties paires I00 à I07 et les huit sorties impaires I10 à I17 du groupe de circuits entrants GCE associé. Les matrices de transfert S0/0 et S0/1 à huit entrées ont trente-deux sorties reliées chacune à une mémoire paquet MP et sont connectées à deux marqueurs de matrice MQS0 et MQS1. Les deux sous-groupes de trente-deux mémoires paquets MP0 à MP31 et MP32 à MP63 ont leurs mémoires paquets connectées chacune à un circuit de supervision et de contrôle de mémoire paquet, SCMP0 à SCMP31 et SCMP32 à SCMP63, et aux marqueurs de matrice MQS0 et MQS1 respectivement. Un circuit de commande d'accès entrant CAE reçoit du multiplexeur du groupe de circuits entrants GCE correspondant une première liaison GCES et envoie au démultiplexeur une seconde liaison GCEE ; de plus, il est relié aux deux marqueurs de matrice MQS0 et MQS1 et à un circuit de calcul d'indicateur de charge du groupe de mémoires paquets CICGMP. Un circuit traducteur d'acheminement TACH est connecté aux soixante-quatre circuits de supervision et de contrôle de mémoire paquet SCMP0 à SCMP63 et à un circuit de gestion de nouveaux paquets reçus GNPR. Un circuit d'accès réception de groupe de circuits sortants ARGCS envoie un signal indicateur de file d'attente saturée IFAS et un signal d'accusé de réception de paquet ARP au circuit de gestion de nouveaux paquets reçus GNPR et il envoie, de plus, un signal de volume binaire de paquets en attente de sortie VBPAS au circuit traducteur d'acheminement TACH ; ces trois derniers signaux proviennent des groupes de circuits sortants GCS par un bus d'entrée BE. Un circuit d'accès émission vers les groupes de circuits sortants AEGCS reçoit un signal indicateur de charge du groupe de mémoires paquets ICGMP du circuit de calcul d'indicateur de charge du groupe de mémoires paquets CICGMP et un signal de caractéristiques de nouveaux paquets reçus CNPR du circuit de gestion de nouveaux paquets reçus GNPR et les envoie aux groupes de circuits sortants GCS sur un bus de sortie BS. Les circuits de supervision et de contrôle de mémoire paquet SCMP0 à SCMP63 sont reliés aux groupes de circuits sortants GCS par des fils de maintien FME, des fils de commande aller FCAE et des fils de commande retour FCRE transmettant des signaux de commande directe par l'intermédiaire du réseau de transfert de paquets RTP, qui comprend trois plans de trois étages S1, S2, S3 de matrices de transfert, celles du premier étage recevant chacune les soixante-quatre fils de maintien ou de commande d'un groupe de mémoires paquets GMP.

Les mémoires paquets proprement dites MP0 à MP31 accèdent chacune au réseau de transfert de paquets par p liaisons, p étant le nombre de plans de transfert des informations du réseau de transfert de paquets RTP comme on le verra ci-dessous.

Ainsi, dès le début de réception d'un paquet, le circuit d'accès entrant CAE reçoit la demande de mémoire paquet de la sortie GCES du multiplexeur du groupe de circuits entrants correspondant et la communique aux marqueurs de matrice MQS0 et MQS1 dont il reçoit l'état de charge des sous-groupes de mémoires paquets qu'il communique à l'entrée GCEE du démultiplexeur du groupe de circuits entrants GCE et au circuit de calcul d'indicateur de charge du groupe de mémoires paquets CICGMP. Grâce aux matrices de transfert SO/0 et SO/1, les marqueurs de matrice MQSO et MQSl aiguillent les paquets vers les mémoires paquets MP disponibles, reçoivent les informations de disponibilité de mémoires paquets MP, envoient au circuit entrant CAE l'état d'occupation des sous-groupes de mémoires paquets MP et en reçoivent les demandes de mémoires paquets. Les circuits de supervision et de contrôle de mémoire paquet SCMP0 à SCMP63 envoient au marqueur de matrice MQSO ou MQSl correspondant à leur sous-groupe, l'état de disponibilité des mémoires paquets et l'avertissent de la fin de réception des paquets. Les circuits de supervision et de contrôle de mémoire paquet SCMP0 à SCMP63 communiquent, après décodage, les en-têtes des paquets au circuit traducteur d'acheminement TACH, les modifient sur ordre éventuel du circuit traducteur d'acheminement TACH, gèrent les échanges de signaux de commande directe avec les circuits sortants CS à travers le réseau de transfert paquets RTP et sont avertis par le marqueur de matrice correspondant à leur sous-groupe de l'arrivée d'un paquet. Le circuit traducteur d'acheminement TACH traduit l'en-tête reçu, envoie des indications de transformation au circuit de supervision et de contrôle de mémoire paquet SCMP concerné, choisit la ligne sortante LS sur la base des indications de charge des lignes sortantes LS données par le volume binaire des paquets en attente de sortie VBPAS et transfère les caractéristiques du paquet reçu au circuit de gestion de nouveaux paquets reçus GNPR. Le circuit de gestion de nouveaux paquets reçus GNPR gère les envois des signaux de caractéristiques de nouveaux paquets reçus GNPR au circuit d'accès émission vers les groupes de circuits sortants AEGCS et reçoit en retour les accusés de réception de paquet ARP correspondants, les envois étant conditionnés par l'état de l'indicateur de file d'attente saturée IFAS diffusé par chaque groupe de circuits sortants GCS à tous les groupes de mémoires paquets GMP0 à GMP31 et par la fin de réception de paquet des paquets concernés. Le circuit de calcul des indicateurs de charge du groupe de mémoires paquets CICGMP calcule les indicateurs de charge du groupe de mémoires paquets ICGMP mettant en évidence un seuil de surcharge des mémoires paquets MP et un seuil de surcharge des accès d'un groupe de mémoires paquets GMP au premier étage S1 du réseau de transfert de paquets RTP. Les circuits d'accès réception et émission des groupes de circuits sortants ARGCS et AEGCS reçoivent les indicateurs de file d'attente saturée IFAS, les accusés de réception de paquet ARP et le volume binaire de paquets en attente de sortie VBPAS, et émettent les indicateurs de charge du groupe de mémoires paquets ICGMP et les caractéristiques de nouveaux paquets reçus CNPR, respectivement sur le bus d'entrée BE et sur le bus de sortie BS.

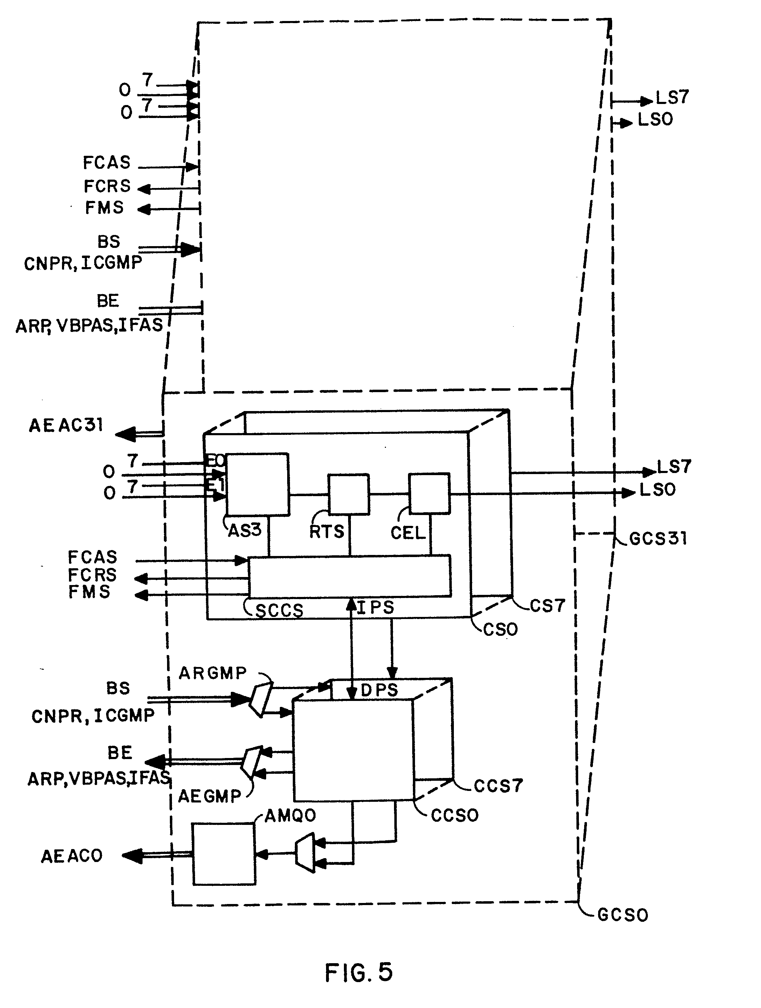

Sur la figure 5 sont représentés les trente-deux groupes de circuits sortants GCS0 à GCS31 composés chacun de huit circuits sortants CS0 à CS7 et de leurs circuits de commande de circuit sortant CCS0 à CCS7. Les circuits sortants CS0 à CS7 accueillent les paquets sur un commutateur d'accès AS3 à deux entrées E0 et E1, chaque entrée comportant p liaisons, p étant le nombre de plans de transfert des informations du réseau de transfert de paquets RTP, comme on le verra ci-dessous. Chaque commutateur d'accès AS3 comporte, par ailleurs, une sortie reliée à un registre tampon de sortie RTS connecté à un circuit d'émission de ligne CEL qui dessert une ligne sortante LS. Ces trois circuits du circuit sortant CS sont connectés à un circuit de supervision et de commande de circuit sortant SCCS, lui-même interne au circuit sortant CS et connecté à un circuit de commande de circuit sortant CCS. Un bus de sortie BS amène les signaux d'indicateur de charge du groupe de mémoires paquets ICGMP et de caractéristiques de nouveaux paquets reçus CNPR vers des démultiplexeurs d'accès réception des groupes de mémoires paquets ARGMP dont les huit sorties sont reliées aux circuits de commande de circuit sortant CCS0 à CCS7, eux-mêmes connectés à des multiplexeurs d'accès émission vers les groupes de mémoires paquets AEGMP à huit entrées et dont la sortie fournit, sur le bus d'entrée BE, les signaux d'accusé de réception de paquet ARP, de volume binaire de paquets en attente de sortie VBPAS et d'indicateur de file d'attente saturée IFAS. Les huit circuits de commande de circuit sortant CCS0 à CCS7 reçoivent un signal de demande de paquet suivant DPS de leur circuit sortant CS et lui envoient un signal d'initialisation de paquet suivant IPS. Un troisième multiplexeur à huit entrées, chacune reliée à un circuit de commande de circuit sortant CCS0 à CCS7, a sa sortie connectée à un circuit d'accès au marqueur AMQ dont la sortie donne les adresses d'extrémités à connecter AEAC0 à AEAC31. Ainsi, le commutateur d'accès AS3 au troisième étage S3 du réseau de transfert de paquets RTP permet de basculer d'un accès à l'autre pour recevoir le paquet suivant à transmettre dès la fin du paquet précédent. Le registre tampon de sortie RTS permet le respect du protocole de transmission utilisé sur la ligne sortante. Le circuit d'émission de ligne CEL assure les fonctions de codage du signal en ligne. Le circuit de supervision et de contrôle de circuit sortant SCCS échange et gère des signaux de commande directe, par des fils doublés de maintien FMS, des fils doublés de commande aller FCAS et des fils doublés de commande retour FCRS, avec les groupes de mémoires paquets GMP à travers le réseau de transfert de paquets RTP, assure la commande du commutateur d'accès AS3, provoque l'émission des motifs de bourrage sur la ligne sortante, signale au circuit de commande de circuit sortant CCS la fin prochaine du paquet en cours d'émission par une demande de paquet suivant DPS et est averti par le circuit de commande de circuit sortant CCS de l'imminence de ce dernier par le signal d'initialisation de paquet suivant IPS.

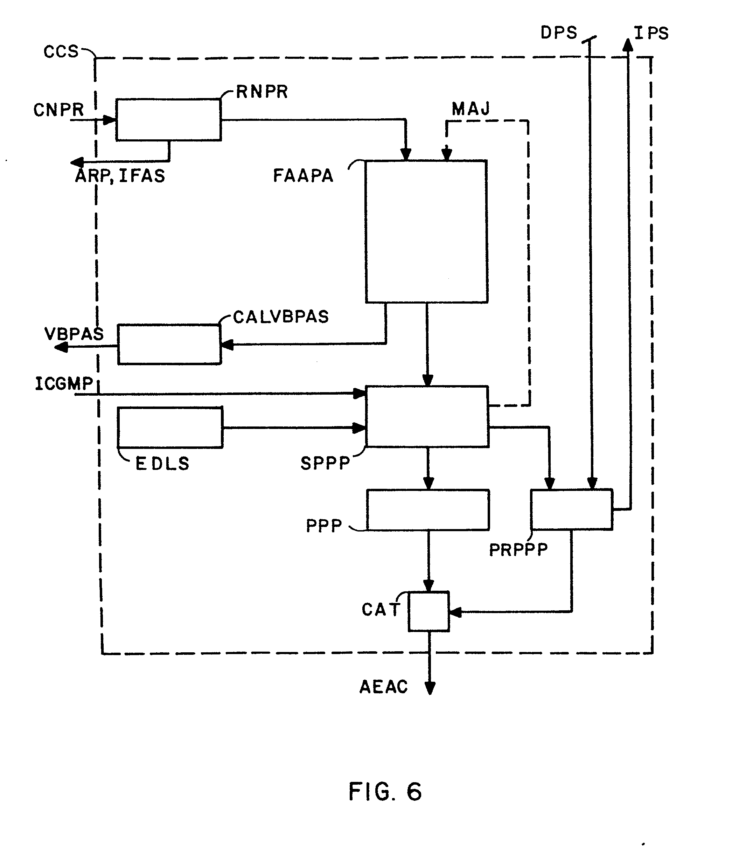

Sur la figure 6 est représenté le circuit de commande de circuit sortant CCS composé d'un circuit de prise de prochain paquet préparé PRPPP recevant le signal de demande de paquet suivant DPS, émettant le signal d'initialisation de paquet suivant IPS et relié à un circuit de sélection de prochain paquet préparé SPPP, lui-même connecté à un circuit d'état dynamique de la ligne sortante EDLS qui reçoit des informations du registre tampon de sortie RTS, à un circuit de file d'attente d'adresses de paquets en attente FAAPA, et recevant les signaux d'indicateur de charge du groupe de mémoires paquets ICGMP. Un circuit de réception de nouveaux paquets reçus RNPR reçoit le signal de caractéristiques de nouveaux paquets reçus CNPR et délivre les signaux d'accusé de réception de paquet ARP et indicateur de file d'attente saturée IFAS, en étant relié au circuit de file d'attente d'adresses de paquets en attente FAAPA qui reçoit un signal de mise à jour MAJ du circuit de sélection de prochain paquet préparé SPPP. Un registre prochain paquet préparé PPP est relié au circuit de sélection de prochain paquet préparé SPPP et à un circuit d'autorisation de transfert CAT qui reçoit, de même, une sortie du circuit de prise de prochain paquet préparé PRPPP et qui délivre le signal d'adresses d'extrémités à connecter AEAC. Un circuit de calcul de volume binaire de paquets en attente de sortie CALVBPAS, relié au circuit de file d'attente d'adresses de paquets en attente FAAPA, délivre le signal de volume binaire de paquets en attente de sortie VBPAS. Ainsi le circuit de réception de nouveaux paquets reçus RNPR transmet les caractéristiques de nouveaux paquets reçus CNPR dans le circuit de file d'attente d'adresses de paquets en attente FAAPA et envoie les signaux d'accusé de réception de paquet ARP et indicateur de file d'attente saturée IFAS aux groupes de mémoires paquets GMP d'après les informations envoyées par le circuit de file d'attente d'adresses de paquets en attente FAAPA. Le circuit de sélection de prochain paquet préparé SPPP choisit les adresses des prochains paquets à transmettre suivant le signal indicateur de charge de groupes de mémoires paquets ICGMP et la priorité des paquets dans le circuit de file d'attente d'adresses de paquets en attente FAAPA, et effectue ce choix périodiquement jusqu'au moment où le circuit d'état dynamique de ligne sortante EDLS, qui reçoit ses informations du registre tampon de sortie RTS et gère les envois de paquets suivant le protocole de transmission sur la ligne sortante LS, autorise l'envoi du paquet. Alors, le contenu du registre de prochain paquet préparé PPP, choisi par le circuit de sélection de prochain paquet préparé SPPP, est transféré, par le circuit d'autorisation de transfert CAT vers le circuit d'accès au marqueur AMQ, sur commande du circuit de prise de prochain paquet préparé PRPPP, lui-même informé de l'instant de transfert par le circuit de sélection de prochain paquet préparé SPPP et par le signal de demande de paquet suivant DPS. Donc, le signal d'adresses d'extrémités à connecter AEAC est transmis après l'arrivée du signal de demande de paquet suivant DPS dès que le circuit de sélection de prochain paquet préparé SPPP, sur information du circuit d'état dynamique de ligne sortante EDLS, l'autorise et le fait qu'un nouveau paquet va être transféré est signalé par le signal d'initialisation de paquet suivant IPS, tandis que le signal de mise à jour MAJ commande l'effacement des références du paquet transmis. Le volume binaire de paquets en attente de sortie VBPAS donne l'état de charge de la ligne sortante LS, suivant la longueur des paquets en attente, et l'indicateur de file d'attente saturée IFAS donne l'état d'occupation de la file d'attente du circuit de file d'attente d'adresses de paquets en attente FAAPA.

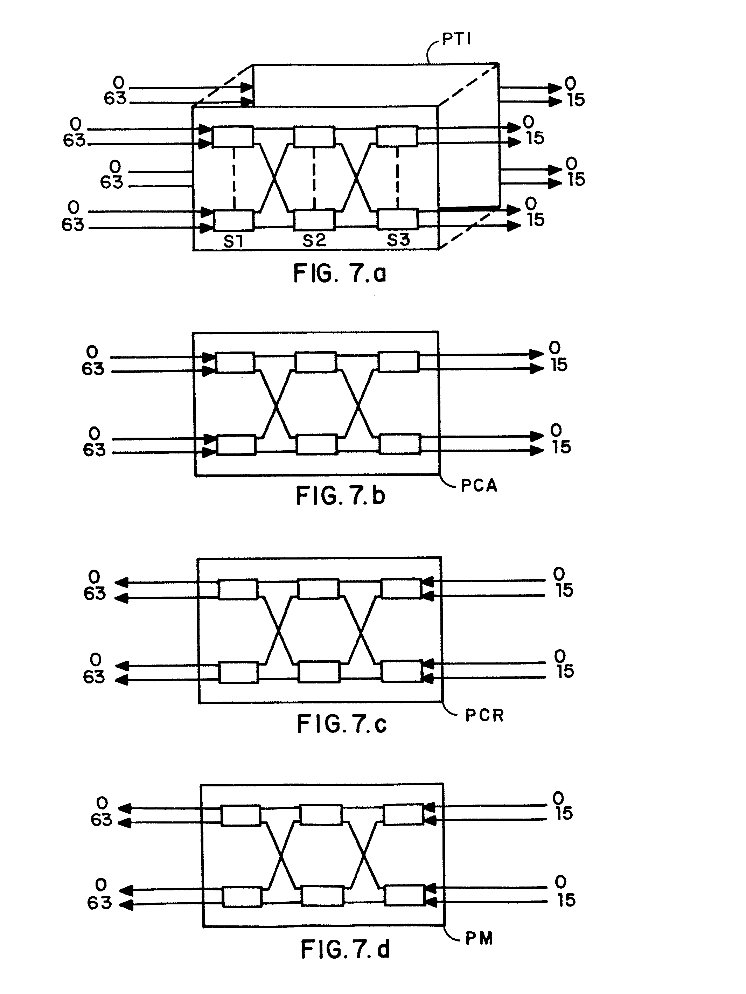

Sur la figure 7.a est représenté le réseau de transfert des informations PTI composé de p plans, p étant un entier naturel, de trois étages S1, S2 et S3 de matrices de transfert, dont les entrées sont connectées aux p sorties de mémoires paquets et dont les sorties sont reliées aux p entrées du commutateur d'accès AS3 des circuits sortants. Ces p plans permettent de commuter plusieurs bits en parallèle de façon à obtenir en sortie un débit supérieur. Par exemple huit plans, commutant des débits numériques de cent quarante mégabits par seconde, permettent de commuter des informations numériques à un débit de 1,12 gigabit par

12      0183592

seconde, cette technique étant appelée technique de sous-multiplexage.

Sur les figures 7.b, 7.c et 7.d sont représentés :

- le plan de commande aller PCA qui transmet les signaux de commande directe début, fin prochaine et fin d'envoi de paquet du fil de commande aller FCAE des groupes de mémoires paquets GMP aux groupes de circuits sortants GCS ;

- le plan de commande retour PCR qui transmet les signaux de commande directe demande d'envoi de paquet du fil de commande retour FCRS des groupes de circuits sortants GCS aux groupes de mémoires paquets ;

- le plan de maintien PM qui transmet le signal de maintien MAINT du fil de maintien FMS, des groupes de circuits sortants GCS aux groupes de mémoires paquets.

Ces p+3 plans parallèles, composés chacun de trois étages S1, S2 et S3 de matrices de transfert, forment le réseau de transfert de paquets RTP.

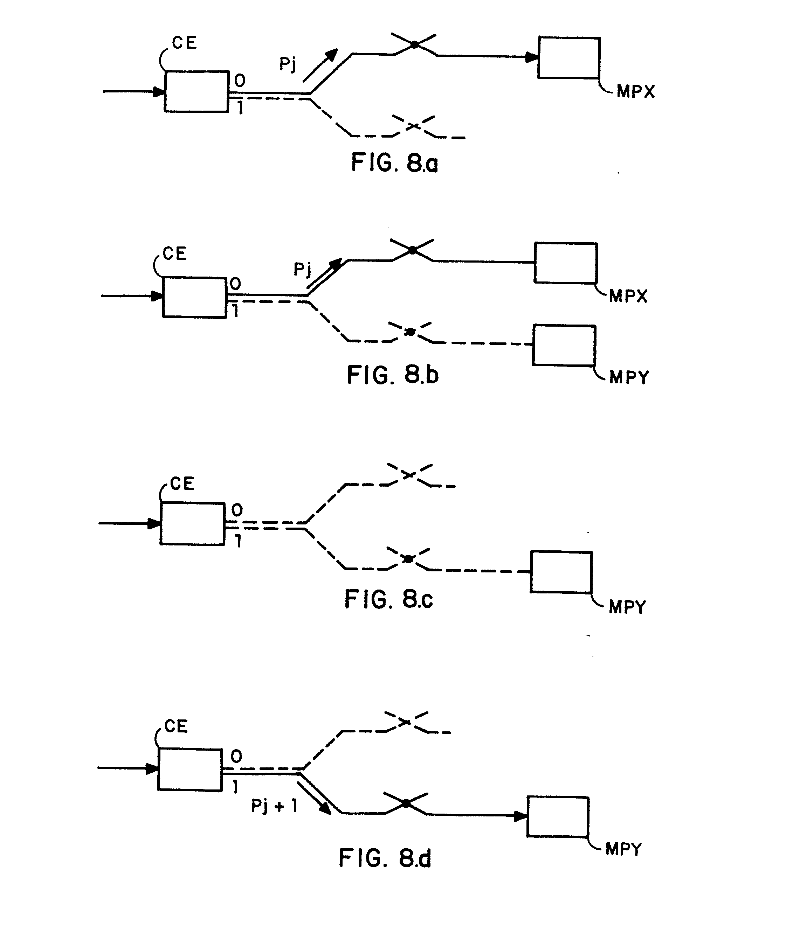

Sur les figures 8.a à 8.d est représenté le déroulement de la réception d'un paquet entrant. Lorsqu'un premier paquet Pj arrive, le commutateur ASO est supposé avoir été présélectionné suivant les disponibilités des sous-groupes de mémoires paquets et la matrice de transfert choisie S0/0 ou S0/1 (figure 4) sélectionne une mémoire paquet MPX par un premier chemin, comme représenté sur la figure 8.a. Dès le début de réception d'un second paquet Pj+1 par le circuit de réception de ligne CRL associé à la ligne entrante LE, l'autre matrice de transfert reçoit une demande de mémoire paquet et met à profit le délai fourni par la ligne à retard LAR pour sélectionner un second chemin pour atteindre une mémoire paquet MPY de l'autre sous-groupe, comme représenté sur la figure 8.b. Dès la fin de réception du premier paquet Pj dans la mémoire paquet MPX, le marqueur de matrice MQSO ou MQS1 concerné déconnecte le premier chemin dans la matrice de transfert, comme représenté sur la figure 8.c. Le circuit de réception de ligne CRL provoque le basculement du commutateur d'accès ASO sur l'autre sortie avec un retard compatible avec celui de la ligne à retard LAR par rapport au début de réception du second paquet Pj+1 de la salve comme représenté figure 8.d. Ainsi le basculement a lieu entre le premier et le second paquet.

Si la fin d'un paquet est détectée alors que le début du paquet suivant ne l'est pas, le commutateur d'accès ASO présélectionne une sortie paire ou impaire suivant les disponibilités des sous-groupes de mémoires paquets ; sinon il bascule sur les sorties paire et impaire alternativement. Dès que le paquet est réceptionné en mémoire, son adresse mémoire est transmise au groupe de circuits sortants GCS concerné, qui la range dans sa file d'attente si elle n'est pas saturée et si la ligne n'est pas au repos. Dès réception du signal de fin prochaine d'envoi du paquet précédent, la demande de paquet suivant DPS est envoyée et le fil de maintien FM correspondant à la deuxième sortie de la matrice de transfert du troisième étage S3 est marqué, la première sortie étant encore occupée pour le maintien du transfert du paquet précédent. Le paquet est alors identifié et les adresses d'extrémités à connecter AEAC sont envoyées au marqueur MQ pour qu'il recherche et connecte un chemin. Le circuit sortant CS reçoit alors le signal d'initialisation de paquet suivant IPS. Dès réception du signal de fin d'envoi du paquet précédent, le commutateur AS3 du circuit sortant (figure 5) bascule, un signal de demande d'envoi de paquet est alors envoyé au groupe de mémoires paquets concerné sur le fil FCR et le fil de maintien FM correspondant à la première sortie de la matrice de transfert du troisième étage S3 est relâché, déconnectant ainsi les points de croisement du chemin du paquet précédent.

Le temps T séparant le signal fin prochaine du paquet et le signal fin du paquet est une constante du système qui résulte d'un compromis entre la probabilité de ne pas être en mesure d'alimenter la ligne sortante LS, alors qu'un paquet est en instance, et le volume trafic fictif supplémentaire dans le réseau de transfert de paquets RTP résultant de la prise de chemin anticipée.

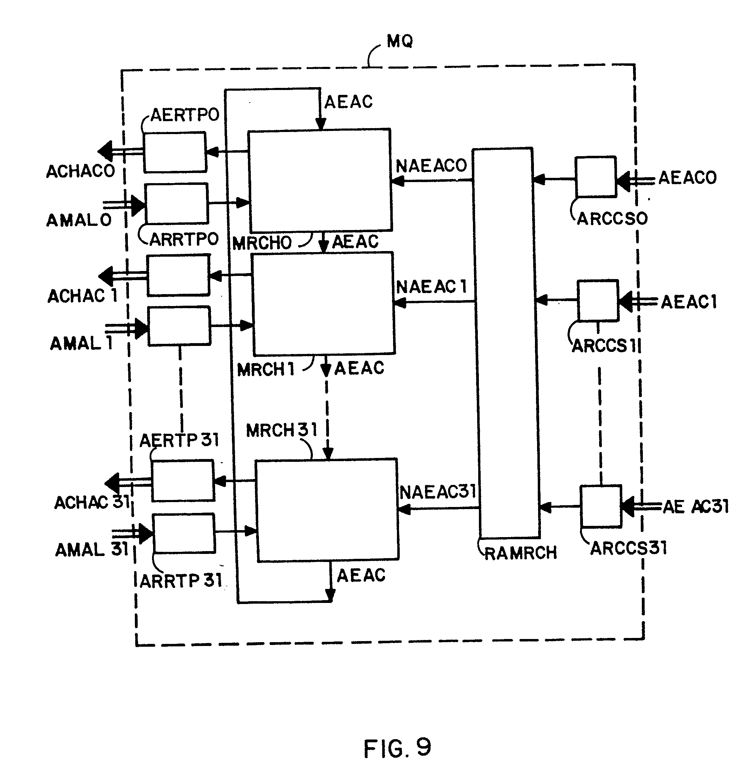

Sur la figure 9 est représenté le marqueur MQ recevant les trente-deux signaux d'adresses d'extrémités à connecter AEAC0 à AEAC31 venant des trente-deux circuits d'accès aux marqueurs AMQ0 à AMQ31 des groupes de circuits sortants, et recevant de même trente-deux signaux d'adresses de mailles à libérer AMAL0 à AMAL31 du réseau de transfert de paquets RTP. Le marqueur MQ est composé de trente-deux circuits d'accès réception de circuit de commande de circuit sortant ARCCS0 à ARCCS31, recevant les signaux d'adresses d'extrémités à connecter AEAC0 à AEAC31 reliés à un circuit répartiteur d'accès aux modules de recherche de chemin RAMRCH dont les trente-deux sorties de nouvelles adresses d'extrémités à connecter NAEAC0 à NAEAC31 sont connectées à trente-deux modules de recherche de chemin MRCH0 à MRCH31 reliés en anneau. Ces modules de recherche de chemin sont reliés chacun à un circuit d'accès émission au réseau de transfert de paquets, AERTP0 à AERTP31, qui émet les signaux d'adresses de chemin à connecter ACHAC0 à ACHAC31 et à un circuit d'accès réception au réseau de transfert de paquets ARRTP0 à

ARRTP31, qui reçoit les signaux d'adresses de mailles à libérer AMALO à AMAL31 des matrices de transfert des second et troisième étages S2, S3 du réseau de transfert de paquets RTP.

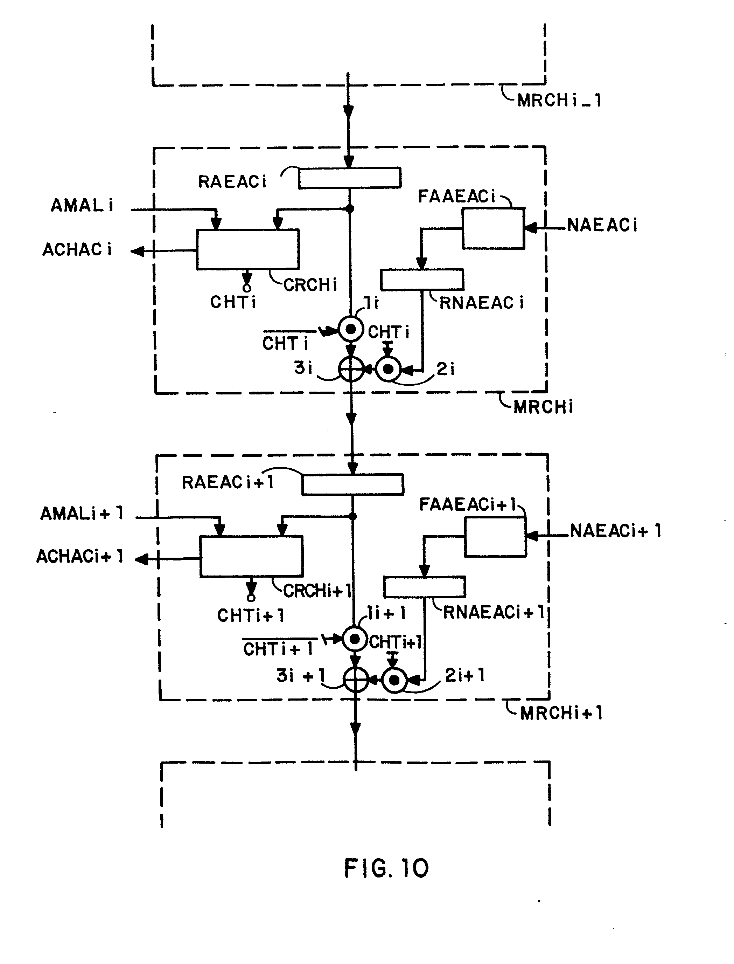

Sur la figure 10 sont représentés des modules de recherche de chemin MRCH (ici MRCHi et MRCHi+1) à l'entrée desquels se trouve un registre d'adresses d'extrémités à connecter RAEAC connecté à un premier circuit d'autorisation de transfert 1 commandé par un signal complémenté de chemin trouvé $\overline{CHT}$ et connecté de même à un circuit de recherche de chemin CRCH qui reçoit le signal d'adresses de mailles à libérer AMAL et émet le signal d'adresse de chemin à connecter ACHAC. Ce circuit de recherche de chemin CRCH délivre le signal de chemin trouvé CHT qui commande un second circuit d'autorisation de transfert 2 dont l'entrée est reliée à la sortie d'un registre de nouvelles adresses d'extrémités à connecter RNAEAC recevant la sortie de la file d'attente d'adresses d'extrémités à connecter FAAEAC qui reçoit les nouvelles adresses d'extrémités à connecter NAEAC. Les sorties des deux circuits d'autorisation de transfert 1 et 2 sont reliées à un circuit logique "OU" 3 dont la sortie est reliée à l'entrée du registre d'adresses d'extrémités à connecter RAEAC du module de recherche de chemin suivant.

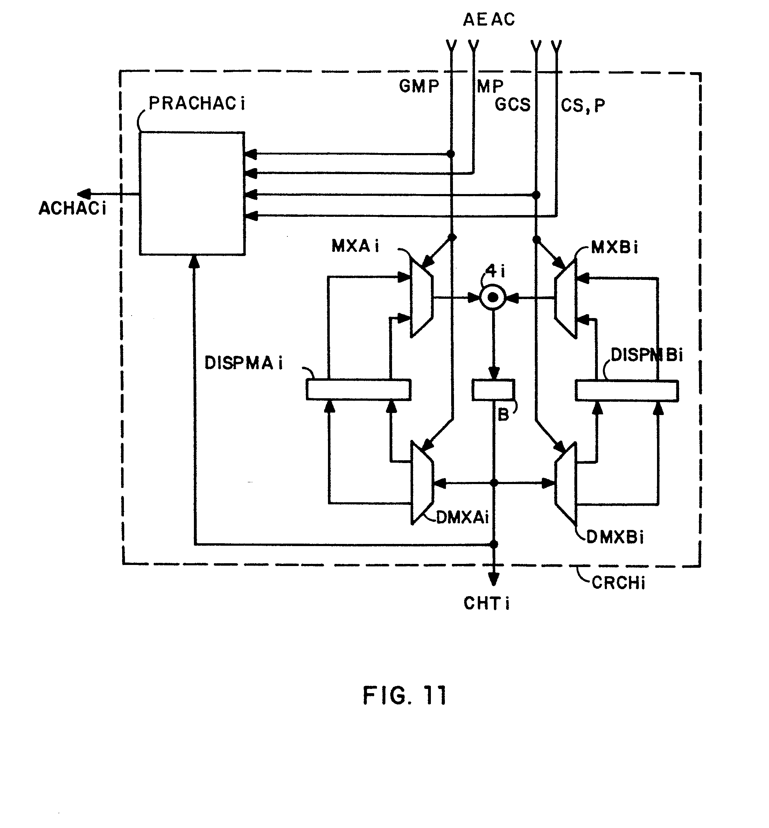

Sur la figure 11 est représenté un circuit de recherche de chemin CRCHi composé d'un premier et d'un second circuits de disponibilité de mailles A et B, DISPMAi, DISPMBi dont les trente-deux entrées sont reliées à un premier et un second démultiplexeurs DMXAi, DMXBi respectivement et dont les trente-deux sorties sont connectées à un premier et un second multiplexeurs MXAi, MXBi respectivement. Les mailles A et B réunissent respectivement le premier au second étage et le second au troisième étage de matrices de transfert. Les premiers multiplexeurs et démultiplexeurs sont commandés par une entrée reliée à la partie du signal d'adresses d'extrémités à connecter AEAC qui identifie le groupe de mémoires paquets GMP. Les seconds multiplexeurs et démultiplexeurs sont commandés par une entrée reliée à la partie qui identifie le groupe de circuits sortants GCS.

Les sorties desdits multiplexeurs sont reliées à un circuit logique "ET" 4i, dont la sortie est connectée à l'entrée d'un circuit bistable B qui émet le signal de chemin trouvé CHTi à l'entrée des deux démultiplexeurs et sur un circuit de préparation d'adresse de chemin à connecter PRACHACi qui reçoit de même l'adresse d'extrémité à connecter AEAC et donne en sortie l'adresse de chemin à connecter ACHACi.

Ainsi, après avoir traversé le circuit répartiteur d'accès aux modules de recherche de chemin RAMRCH (figure 9) modifiant périodiquement l'affectation des trente-deux modules de recherche de chemin MRCH par rapport aux trente-deux circuits d'accès réception des circuits de commande de circuit sortant ARCCS, une demande de recherche et connexion de chemin provenant d'un circuit de commande de circuit sortant CCS est mise dans la file d'attente d'adresses d'extrémités à connecter FAAEAC (figure 10) d'un module de recherche de chemin MRCH donné. Les trente-deux modules de recherche de chemin MRCH fonctionnent simultanément et en synchronisme pour trouver un chemin dans leur matrice de transfert respective du second étage S2, effectuant ainsi trente-deux recherches de chemin simultanées par cycle de temps. Quand une demande est présente dans le registre d'adresses d'extrémités à connecter RAEAC du module de recherche de chemin MRCH, si durant le cycle de temps suivant, le circuit de recherche de chemin CRCH trouve un chemin (signal de chemin trouvé CHT au niveau logique 1), il prépare les ordres de connexion correspondants pour les matrices de transfert concernées des premier, second et troisième étages du réseau de transfert de paquets RTP. Au temps suivant, c'est donc une nouvelle demande d'adresses d'extrémités à connecter NAEAC provenant de la file d'attente d'adresses d'extrémités à connecter FAAEAC, par l'intermédiaire du registre de nouvelles adresses d'extrémités à connecter RNAEAC, qui est transférée dans le registre d'adresses d'extrémités à connecter RAEAC du module de recherche de chemin MRCH suivant. Par contre, si le circuit de recherche de chemin CRCH ne trouve pas de chemin (signal de chemin trouvé CHT au niveau logique 0), c'est le contenu du registre d'adresses d'extrémités à connecter RAEAC de ce module qui est transféré dans le registre d'adresses d'extrémités à connecter RAEAC du module de recherche de chemin MRCH suivant. Dans chaque circuit de recherche de chemin CRCH, associé à une matrice particulière du second étage S2, il n'existe qu'une seule maille MA entre les premier et second étages S1, S2 pour atteindre une mémoire dans un groupe de mémoires donné, étant donné l'association rigide entre un module de recherche de chemin MRCH et une matrice de transfert du second étage S2 du réseau de transfert de paquets RTP, et qu'une seule maille MB entre les second et troisième étages pour atteindre un circuit sortant dans un groupe de circuits sortants GCS donné. Donc, lors d'un premier temps t1, le contenu du registre d'adresses d'extrémités à connecter RAEAC sélectionne, d'une part le contenu du circuit de disponibilité de mailles MA DISPMAi et, d'autre part, le contenu du circuit de disponibilité de mailles MB DISPMBi, correspondant aux groupes de mémoires paquets et de circuits sortants concernés. Ces états de disponibilité sont mis en fonction logique "ET" et le résultat est enregistré, au second temps t2 du cycle de temps, par le bistable B, ce qui sert à la mise à jour des registres de disponibilité des mailles DISPMAi et DISPMBi, par les démultiplexeurs DMXAi et DMXBi respectivement. La fonction de libération des mailles MA et MB, consécutive à chaque relâchement de connexion dans le réseau de transfert de paquets RTP, n'est pas représentée sur la figure 11, mais elle consiste à ajouter des accès aux deux registres de disponibilité de mailles DISPMAi et DISPMBi qui permettent de positionner les bits au niveau logique $1$ pour chaque maille libérée.

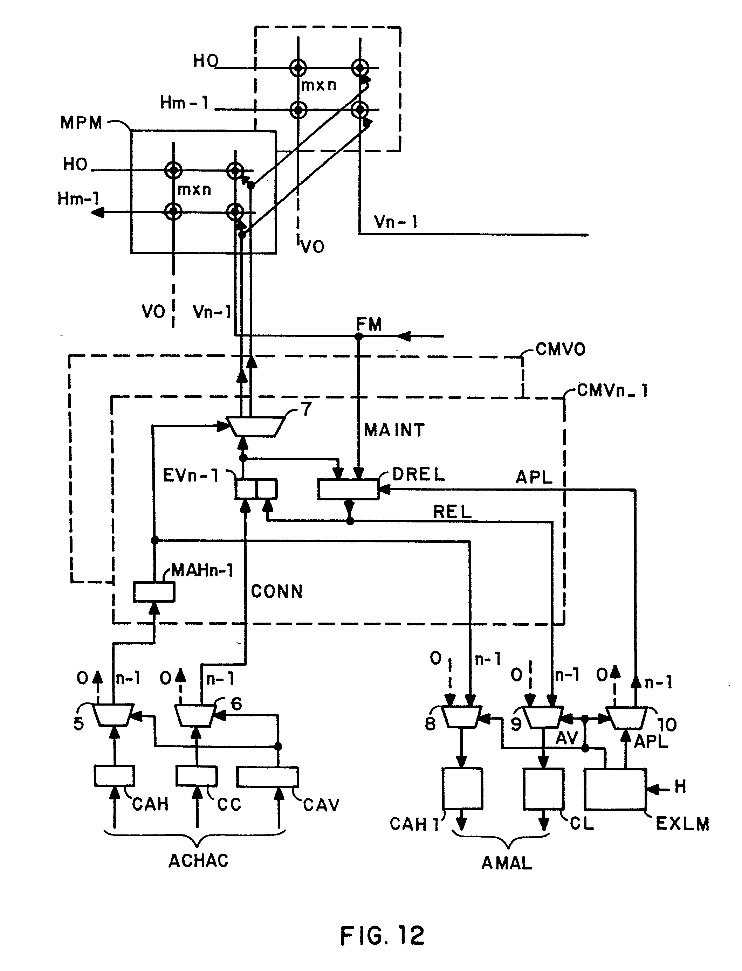

La figure 12 représente un circuit de gestion des points de croisement d'une matrice de transfert où trois circuits, à savoir circuit adresse horizontale CAH, circuit adresse verticale CAV et circuit connexion CC, reçoivent chacun une partie du signal d'adresse de chemin à connecter ACHAC. Les sorties des circuits adresse horizontale CAH et connexion CC sont reliées à deux démultiplexeurs à n sorties 5 et 6, n étant un entier naturel, commandés par le signal en sortie du circuit adresse verticale CAV. Les n sorties du démultiplexeur 5 du circuit adresse horizontale CAH sont reliées à n circuits de commande de marquage de verticale, CMV0 à CMVn-1, par l'intermédiaire d'un circuit de marquage horizontal, MAH0 à MAHn-1, interne à ces circuits de commande de marquage de verticale, CMV0 à CMVn-1, qui contiennent aussi un circuit bistable, EV0 à EVn-1, recevant en entrée un signal de connexion CONN qui provient d'une des n sorties du démultiplexeur 6, de même ordre que la sortie du démultiplexeur 5 correspondante. Dans chacun de ces circuits de commande de marquage de verticale CMV, un démultiplexeur 7 à m sorties, m étant un entier naturel, reliées chacune à la commande des points de croisement analogues de plusieurs plans de matrices m x n situés sur la verticale associée au circuit CMV considéré et sur l'horizontale de rang correspondant à celui de la sortie du démultiplexeur 7. Ce démultiplexeur 7 a son entrée reliée à la sortie du bistable EV et est commandé par la sortie du circuit de marquage horizontal MAH. Un circuit de détection de relâchement DREL reçoit la sortie du bistable EV et un signal de maintien MAINT, provenant du fil de maintien passant, à travers le réseau de transfert de paquets RTP, par la verticale V correspondante de

la matrice de transfert du plan de maintien MPM. Il est à noter que tous les points de croisement analogues des différents plans de matrices de transfert sont reliés entre eux en ce qui concerne la commande. Ces circuits de détection de relâchement DREL, délivrant un signal de relâchement REL, ont leur sortie reliée au bistable EV du même circuit de commande de marquage de verticale CMV et à un multiplexeur 9 à n entrées dont la sortie est connectée à un circuit de libération CL et dont la commande est effectuée par un signal d'adresse verticale AV délivré par un circuit explorateur de libération de maille EXLM. La sortie des n circuits de marquage horizontal, MAH0 à MAHn-1, est reliée à un autre multiplexeur 8 contrôlé par le même signal d'adresse verticale AV que le précédent multiplexeur 9 et dont la sortie est connectée à un circuit d'adresse horizontale CAH1 délivrant, avec le circuit de libération CL, le signal d'adresses de mailles à libérer AMAL. Le signal d'adresse verticale AV, fourni par le circuit explorateur de libération de maille EXLM commandé par un signal d'horloge H, est connecté à l'entrée de commande d'un démultiplexeur 10 qui fournit aux n circuits de commande de marquage de verticale CMV0 à CMVn-1 un signal d'accusé de prise de libération APL, connecté au circuit de détection de relâchement DREL, et venant du circuit explorateur de libération de maille EXLM.

Ainsi le marqueur MQ délivre un signal d'adresse de chemin à connecter ACHAC comprenant, par exemple six bits d'adresse horizontale, cinq bits d'adresse verticale, cinq bits indiquant le numéro de la matrice, un bit de connexion et un bit de réserve. Les cinq bits de numéro de matrice sélectionnent le circuit de gestion des points de croisement concerné qui, par le circuit d'adresse verticale, les cinq bits d'adresse verticale et le démultiplexeur 5, sélectionne le circuit de commande de marquage de verticale, CMV0 à CMVn-1. Celui-ci, par le circuit de marquage horizontal MAH et le démultiplexeur 7, sélectionne le point de croisement de la matrice de transfert et, par le bistable EV, lui envoie le signal de connexion CONN. Ce signal de connexion CONN est obtenu par le circuit de connexion CC et le démultiplexeur 6 qui reçoivent le bit de connexion. Le bit de connexion entraîne la fermeture des points de croisement analogues qui ne seront ouverts que lorsque le signal de maintien MAINT, provenant du groupe de circuits sortants ou de l'étage de matrice de transfert précédent et transmis par le fil de maintien dans le plan de maintien PM, disparaîtra. C'est ce signal de maintien MAINT qui fait passer le circuit de détection de relâchement DREL dans l'état "connecté" qui est mémorisé. Au moment où le signal de maintien MAINT disparaît, le signal de relâchement REL passe au niveau logique 1 et remet le bistable EV au niveau logique 0, d'où ouverture des points de croisement correspondants. Le circuit explorateur de libération de maille EXLM examine les signaux de relâchement REL des circuits de commande de marquage de verticale CMV les uns après les autres grâce à l'horloge H et aux multiplexeurs 8 et 9 et lorsqu'un signal de relâchement est au niveau logique 1, le signal d'adresses de mailles à libérer AMAL, composé de cinq bits d'adresse horizontale qui sont les codes de maille A ou B, et d'un bit de libération, est envoyé au marqueur MQ par le circuit de libération CL et le circuit d'adresse horizontale CAH1, transmettant respectivement le signal de relâchement REL au niveau logique 1 et le signal en sortie du circuit de marquage horizontal MAH qui comporte une fonction de mémorisation. Le circuit de détection de relâchement DREL, dès qu'il reçoit le signal d'accusé de prise de libération APL, se remet à l'état "repos" si le signal de maintien MAINT est au niveau logique 0 et le signal de relâchement REL au niveau logique 1. Ainsi, le signal de maintien MAINT permet de maintenir le chemin connecté puis de le relâcher une fois que le signal de commande directe de fin de paquet a été envoyé sur le plan de commande aller PCA et reçu par le groupe de circuits sortants GCS. Il est à noter que le mécanisme de libération de maille n'existe que dans les second et troisième étages S2, S3 de matrices de transfert, leurs adresses horizontales correspondant respectivement aux mailles A et B du réseau de transfert de paquets RTP.

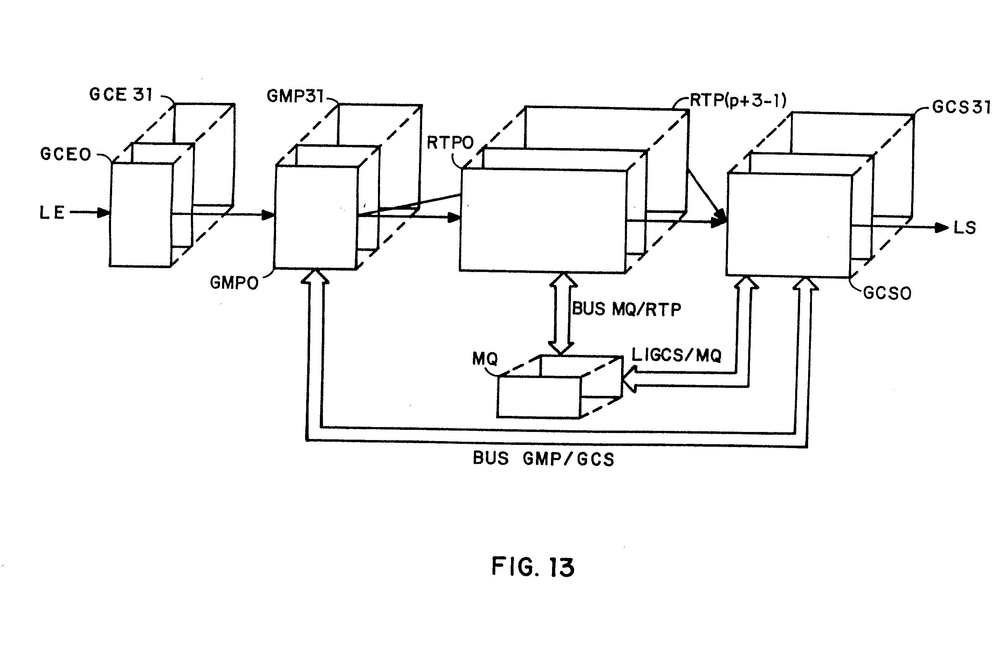

Sur la figure 13 est représenté un schéma général des différentes liaisons entre blocs du commutateur où un bus optique BUSGMP/GCS relie les groupes de mémoires paquets aux groupes de circuits sortants, un bus optique BUSMQ/RTP relie le réseau de transfert de paquets au marqueur et une liaison LIGCS/MQ relie le marqueur aux groupes de circuits sortants.

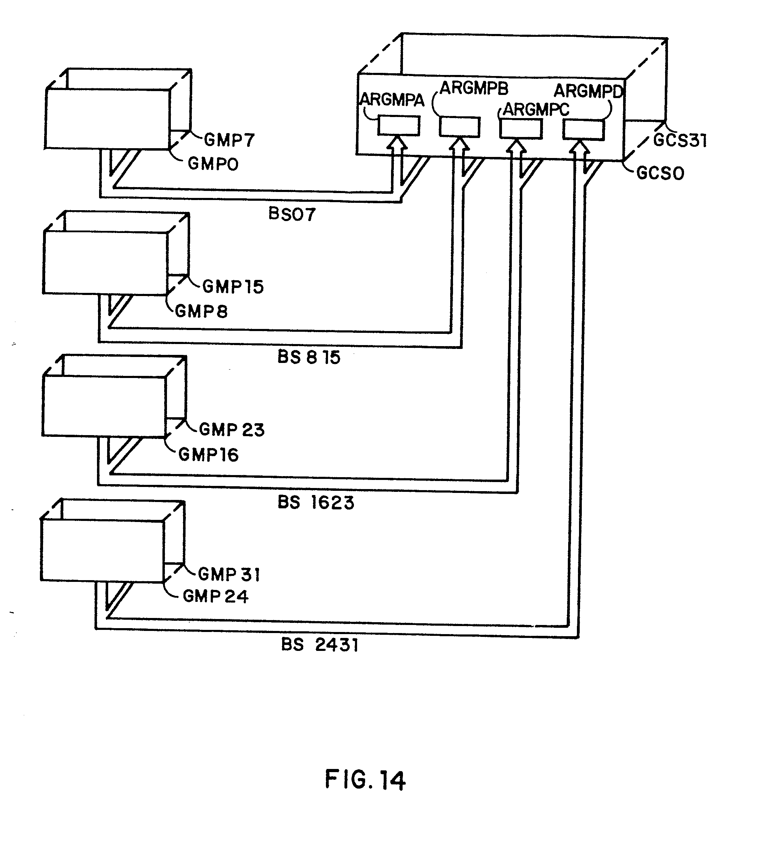

La figure 14 représente le bus de sortie BS, décomposé en quatre bus BS07, BS815, BS1623 et BS2431, allant respectivement de chacun des quatre ensembles de huit groupes de mémoires paquets GMP0 à GMP7, GMP8 à GMP15, GMP16 à GMP23 et GMP24 à GMP31 vers quatre démultiplexeurs d'accès réception de groupes de mémoires paquets ARGMPA, ARGMPB, ARGMPC et ARGMPD dans chaque groupe de circuits sortants GCS0 à GCS31. Ce bus de sortie BS envoie trente-deux caractéristiques de nouveaux paquets reçus CNPR en quatre trames de huit fois un intervalle de temps divisé en six bits d'adresse de mémoire paquet, cinq bits d'adresse de groupe de circuits sortants destinataire, trois bits de circuit sortant destinataire, douze bits de longueur du paquet en octets, trois bits d'indicateur de charge de groupe de mémoires paquets et trois bits de contrôle et réserve.

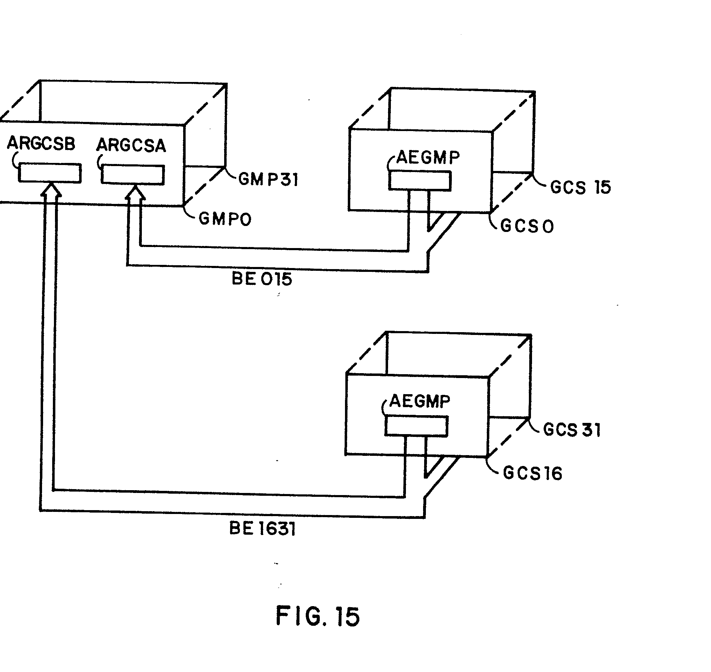

La figure 15 représente le bus d'entrée optique BE, décomposé en deux bus BE015 et BE1631, allant respectivement de chacun des deux ensembles de seize groupes de circuits sortants GCS0 à GCS15 et GCS16 à GCS31 vers deux circuits d'accès réception de groupe de circuits sortants ARGCSA et ARGCSB, dans chaque groupe de mémoires paquets GMP0 à GMP31. Ce bus d'entrée BE envoie deux trames de seize intervalles de temps composés de :

- huit fois un bit par circuit sortant CS d'indicateur de file d'attente saturée IFAS ;
- deux bits par circuit sortant CS de volume binaire de paquet en attente de sortie VBPAS, d'où la nécessité d'utiliser une supertrame de huit trames pour chaque groupe de circuits sortants GCS ;
- deux fois un bit d'accusé de réception de paquet ARP.

Il est à noter qu'il y a trente-deux bits d'accusé de réception de paquet ARP par trame, correspondant au maximum de trente-deux envois de caractéristiques de nouveaux paquets reçus que peuvent envoyer les groupes de mémoires paquets GMP, en quatre trames, au même groupe de circuits sortants GCS.

Ces deux bus d'entrée et de sortie BE et BS constituent le bus optique BUSGMP/GCS qui relie les groupes de mémoires paquets aux groupes de circuits sortants.

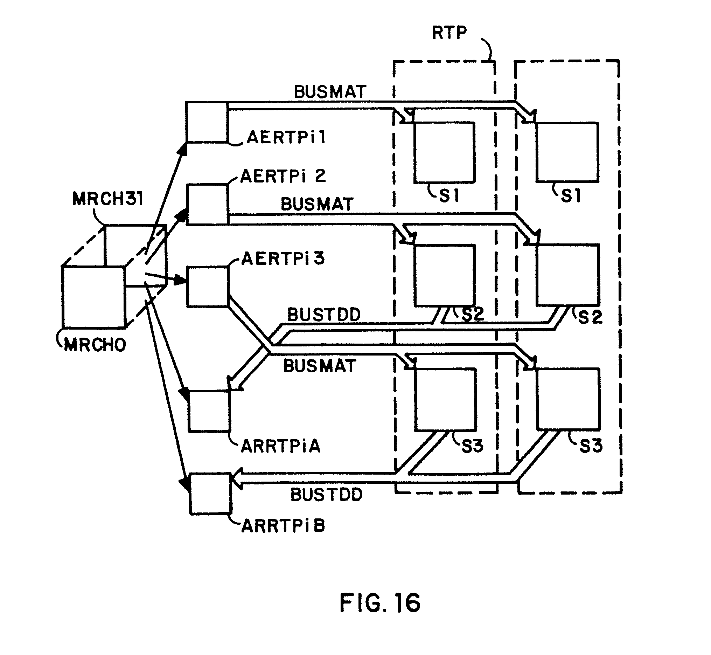

La figure 16 représente le bus optique BUSMQ/RTP reliant les circuits de modules de recherche de chemin MRCH0 à MRCH31 au réseau de transfert de paquets RTP et décomposé en :

- trois bus optiques BUSMAT allant de chaque circuit d'accès émission au réseau de transfert de paquets AERTP0 à AERTP31 du marqueur respectivement vers les trois étages S1, S2 et S3 de matrices de transfert du réseau de transfert de paquets RTP et transportant l'adresse du chemin à connecter ACHAC déjà décrite précédemment. En fait, comme il est représenté sur la figure 16, chaque circuit AERTPi est composé de trois parties AERTPi1 à AERTPi3 traitant chacune respectivement les informations d'adressage nécessaires pour les commandes respectives des étages S1 à S3 du réseau de transfert de paquets RTP ;

- deux bus BUSTDD allant des second et troisième étages S2 et S3 de matrices de transfert du réseau de transfert de paquets RTP à chaque circuit d'accès réception au réseau de transfert de paquets ARRTP0 à ARRTP31 et transportant le signal d'adresses de mailles à libérer AMAL déjà décrit précédemment. En fait, comme il est représenté sur la figure 16, chaque circuit ARRTPi est composé de deux parties ARRTPi1 et ARRTPi3 traitant chacune respectivement les informations de libération des mailles reliant le premier étage S1 au second étage S2 et le second étage S2 au troisième étage S3.

La liaison LIGCS/MQ est un ensemble de trente-deux liaisons point à point de chaque groupe de circuits sortants vers chaque circuit d'accès réception de circuit de commande de circuits sortants ARCCS du marqueur MQ (figure 7), sur lesquels sont envoyés les signaux d'adresses d'extrémités à connecter AEAC composés de cinq bits d'adresse de groupe de mémoires paquets, de six bits d'adresse de mémoire paquet, de cinq bits d'adresse de groupe de circuits sortants, de trois bits d'adresse de circuit sortant, d'un bit de parité du commutateur d'accès AS3 du circuit sortant, d'un bit de demande et de trois bits de réserve.

Le commutateur asynchrone décrit précédemment doit permettre de commuter des paquets dans le cadre, par exemple, de réseaux multiservices comprenant de la vidéocommunication, c'est-à-dire avec des vitesses très élevées.

Bien entendu, l'exemple de réalisation décrit n'est nullement limitatif de l'invention.

REVENDICATIONS

1. Commutateur de paquets asynchrone de structure spatiale-temporelle-spatiale, composé de plusieurs groupes de lignes entrantes accédant chacun, par un premier étage de commutation spatiale, à un deuxième étage temporel composé de deux sous-groupes de t mémoires paquets, t étant un entier naturel, dont les sorties sont dirigées sur un réseau de transfert de paquets à trois étages spatiaux ou plus distribuant les paquets à plusieurs groupes de lignes sortantes, caractérisé en ce qu'il comporte :

- des premiers moyens (GCE0 à GCE31) pour permettre l'accession de chaque paquet à un sous-groupe de mémoires paquets, dès le début de réception du paquet entrant ;

- des seconds moyens (CAE, LAR, SCMP0 à SCMP63, SO/0, SO/1, MQS0, MQS1, MP0 à MP63) pour déterminer, suivant l'état d'occupation des mémoires paquets, la mémoire d'accueil d'un paquet entrant, dès le début de sa réception, et lui en permettre l'accession ;

- des troisièmes moyens (SCMP0 à SCMP63, TACH, CICGMP, GNPR) pour déterminer la ligne sortante concernée dès la fin de stockage du préfixe du paquet et pour envoyer les caractéristiques dudit paquet à ladite ligne sortante dès la fin de stockage du paquet ;

- des quatrièmes moyens (SCMP0 à SCMP63, PCA, PCR, PM, SCCS) pour échanger des informations sur le déroulement du transfert de paquets grâce à des plans de commutation parallèles à ceux du réseau de transfert de paquets ;

- des cinquièmes moyens (GCS0 à GCS31) pour demander la recherche et la connexion d'un chemin entre la mémoire paquet et la ligne sortante concernée dès la fin prochaine de transfert du paquet précédent et pour demander l'envoi du paquet dès la fin de transfert du paquet précédent ; et

- des sixièmes moyens (MQ) pour rechercher et établir un chemin entre la mémoire paquet et la ligne sortante concernée dès réception de la demande de recherche et de connexion provenant des cinquièmes moyens.

2. Commutateur de paquets asynchrone selon la revendication 1, caractérisé en ce que lesdits premiers moyens comportent pour chaque ligne entrante :

- un circuit de réception de ligne (CRL) décodant le signal reçu et transférant les bits reçus ;

- une ligne à retard (LAR), connectée à la sortie du circuit de réception de ligne (CRL), introduisant un retard suffisant pour permettre la recherche et la connexion d'une mémoire paquet appartenant à un sous-groupe de mémoires paquets donné (MPO à MP31, MP32 à MP63) à la ligne entrante (LE) ;

- un commutateur d'accès (ASO) effectuant la sélection dudit sous-groupe de mémoires paquets ;

- un circuit de supervision et de contrôle de circuit entrant (SCCE), connecté au circuit de réception de ligne (CRL), à la ligne à retard (LAR) et au commutateur d'accès (ASO), détectant les débuts et fins de paquets et commandant ledit commutateur d'accès (ASO) ;

- un circuit de commande de circuit entrant (CCE), relié au circuit de supervision et de contrôle de circuit entrant (SCCE), présélectionnant, dès la fin de réception d'un paquet, la position du commutateur d'accès (ASO), suivant la position précédente si le début de paquet suivant a été détecté, et les disponibilités des sous-groupes de mémoires paquets, transmises par les seconds moyens, si le début de paquet suivant n'a pas encore été détecté, et envoyant, dès le début de la réception d'un nouveau paquet, une demande de mémoire paquet aux seconds moyens.

3. Commutateur de paquets asynchrone selon l'une des revendications 1 ou 2, caractérisé en ce que lesdits seconds moyens comportent, pour chaque groupe de mémoires paquets (GMPO à GMP31) :

- un circuit d'accès entrant (CAE), relié aux premiers et troisièmes moyens, recevant et transmettant les informations de disponibilité des sous-groupes de mémoires paquets et les demandes de mémoires paquets venant desdits premiers moyens ;

- des marqueurs de matrices (MQSO, MQS1), reliés au circuit d'accès entrant (CAE), à des matrices de transfert (SO/O, SO/1) et aux mémoires paquets (MPO à MP63) déterminant les informations de disponibilité des sous-groupes de mémoires paquets, recevant les demandes de mémoires paquets venant des premiers moyens, via le circuit d'accès entrant (CAE) et dirigeant, à l'aide des matrices de commutation spatiale (SO/O, SO/1) et grâce au délai fourni par la ligne à retard (LAR), les paquets reçus d'un groupe de circuits entrants vers une mémoire paquet libre ; et

- des circuits de supervision et de contrôle de mémoire paquet (SCMPO à SCMP63), connectés aux marqueurs de matrice (MQSO, MQS1) et aux mémoires paquets (MPO à MP63), envoyant les informations de disponibilité des mémoires paquets et un signal de fin de stockage de paquet en mémoire aux marqueurs de matrice (MQSO, MQS1), décodant, modifiant éventuellement le préfixe reçu et transmettant ledit préfixe aux troisièmes moyens.

4. Commutateur de paquets asynchrone selon l'une quelconque des revendications 1 à 3, caractérisé en ce que lesdits troisièmes moyens comportent pour chaque groupe de mémoires paquets (GMP0 à GMP31):

- un circuit traducteur d'acheminement (TACH), relié aux circuits de supervision et de contrôle de mémoire paquet (SCMP0 à SCMP63) choisissant, à partir de tables d'acheminement, la ligne sortante à emprunter, grâce à l'en-tête du paquet décodé dès le début du stockage en mémoire, en fonction du taux d'occupation des lignes sortantes, envoyant, éventuellement, des indications de modifications d'en-tête au circuit de supervision et de contrôle de mémoire paquet (SCMP) et fournissant les caractéristiques de nouveaux paquets reçus dès réception du signal de fin de stockage de paquet en mémoire transmis par les circuits de supervision et de contrôle de mémoire paquet (SCMP0 à SCMP63) ;

- un circuit de gestion de nouveaux paquets reçus (GNPR), relié au circuit traducteur d'acheminement (TACH), pour gérer la transmission des caractéristiques de nouveaux paquets reçus auxdits cinquièmes moyens, en fonction de leur taux d'occupation, dès la fin de stockage du paquet, et pour recevoir les accusés de réception du paquet correspondant ; et

- un circuit de calcul des indicateurs de charge de groupes de mémoires paquets (CICGMP) envoyant, auxdits cinquièmes moyens, les indications de charge des mémoires paquets après réception de l'état d'occupation des sous-groupes de mémoires paquets (MP) du circuit d'accès entrant (CAE) auquel il est connecté.

5. Commutateur de paquets asynchrone selon l'une quelconque des revendications 1 à 4, caractérisé en ce que lesdits quatrièmes moyens comportent :

- les circuits de supervision et de contrôle de mémoire paquet (SCMP0 à SCMP63) envoyant des signaux de début, fin prochaine et fin d'envoi de paquet auxdits cinquièmes moyens ;

- des circuits de supervision et de contrôle de circuit sortant (SCCS) envoyant des signaux de maintien de connexion de points de croisement des matrices de transfert du réseau de transfert de paquets et des signaux de demande d'envoi de paquet auxdits troisièmes moyens ;

- un plan de commande aller (PCA), identique aux plans du réseau de transfert de paquets, transmettant lesdits signaux de début, fin prochaine et fin d'envoi de paquet des circuits de supervision et de contrôle de mémoire paquet (SCMP0 à SCMP63) aux circuits de supervision et de contrôle de circuit sortant (SCCS) ;

- un plan de commande retour (PCR), identique aux plans du réseau de transfert de paquets mais de sens de transfert opposé, transmettant les signaux de demande d'envoi de paquet des circuits de supervision et de contrôle de circuit sortant (SCCS) aux circuits de supervision et de contrôle de mémoire paquet (SCMP0 à SCMP63) ; et

- un plan de maintien (PM), identique aux plans du réseau de transfert de paquets mais de sens de transfert opposé, transmettant le signal de maintien de connexion des points de croisement des matrices de transfert du réseau de transfert de paquets des circuits de supervision et de contrôle de circuit sortant (SCCS) aux circuits de supervision et de contrôle de mémoire paquet (SCMP0 à SCMP63).

6. Commutateur de paquets asynchrone selon l'une quelconque des revendications 1 à 5, caractérisé en ce que lesdits cinquièmes moyens comportent pour chaque groupe de circuits sortants (GCS0 à GCS31) :

- des commutateurs d'accès (AS3) effectuant la connexion entre la ligne sortante (LS0 à LS7) d'un circuit sortant (CS0 à CS7) et le dernier étage (S3) du réseau de transfert de paquets (RTP) ;

- des registres tampons de sortie (RTS), reliés aux commutateurs d'accès (AS3), mettant les paquets en forme avant de les envoyer sur la ligne sortante associée ;

- des circuits d'émission de ligne (CEL) connectés aux registres tampons et assurant le codage du signal en ligne ;

- des circuits de supervision et de contrôle de circuit sortant (SCCS), connectés chacun au commutateur d'accès (AS3), à un registre tampon de sortie (RTS) et à un circuit d'émission de ligne (CEL), assurant la commande du commutateur d'accès (AS3), provoquant l'émission des motifs de bourrage, envoyant, dès réception du signal de fin prochaine d'envoi de paquet, un signal de maintien de connexion des points de croisement des matrices de transfert du réseau de transfert de paquets et un signal de demande de paquet suivant (DPS) et envoyant, dès réception du signal de fin d'envoi de paquet, un signal de demande d'envoi de paquet ;

- des circuits de commande de circuit sortant (CCS0 à CCS7) reliés chacun à un circuit de supervision et de contrôle de circuit sortant (SCCS), mettant en mémoire l'adresse de mémoire paquet et les caractéristiques des paquets en attente de transfert dans les mémoires paquets, délivrant des signaux d'état d'occupation des lignes sortantes associées, demandant, dès réception du signal de demande de paquet suivant (DPS) venant du circuit de supervision et de contrôle de circuit sortant (SCCS) correspondant, aux sixièmes moyens une connexion de chemin par envoi des adresses d'extrémités à connecter et envoyant un signal d'initialisation de paquet suivant (IPS) au circuit de supervision et de contrôle de circuit sortant (SCCS) ; et

- un circuit d'accès au marqueur (AMQ), connecté aux circuits de commande de circuit sortant (CCS0 à CCS7) du groupe de circuits sortants permettant l'envoi aux sixièmes moyens des adresses d'extrémités à connecter (AEAC).

7. Commutateur de paquets asynchrone selon l'une quelconque des revendications 1 à 6 dans lequel le réseau de transfert de paquets est composé de trois étages spatiaux, caractérisé en ce que lesdits sixièmes moyens comportent :

- des modules de recherche de chemin (MRCH), chacun associé à une des matrices de transfert du second étage (S2) du réseau de transfert de paquets, pour rechercher et connecter un chemin libre dans les trois étages de matrices de transfert du réseau de transfert de paquets pour chaque adresse d'extrémités à connecter (AEAC), et pour recevoir les informations de déconnexion de chemin des second et troisième étages (S2,S3) du réseau de transfert de paquets, lesdits modules de recherche de chemin (MRCH) étant connectés en série et bouclés en anneau de telle sorte que, si aucun chemin libre n'a été trouvé par un module, la demande est transmise au module de recherche de chemin suivant ;

- un circuit répartiteur d'accès aux modules de recherche de chemin (RAMRCH) pour modifier périodiquement la provenance des adresses d'extrémités à connecter (AEAC) envoyées à chaque module de recherche de chemin (MRCH) par les groupes de circuits sortants (GCS) ;

- un circuit d'accès réception de circuits de commande de circuit sortant (ARCCS) par groupe de circuits sortants connecté à l'entrée du circuit répartiteur d'accès aux modules de recherche de chemin (RAMRCH) et recevant les adresses d'extrémités à connecter venant des cinquièmes moyens ;

- un circuit d'accès émission du réseau de transfert de paquets (AERTP)
  à chaque sortie d'un module de recherche de chemin (MRCH) permettant
  à celui-ci d'envoyer les adresses des points de croisement à connecter
  aux matrices de transfert qu'emprunte le chemin dans le réseau de
  transfert de paquets, et ce par un signal d'adresse de chemin à
  connecter (ACHAC) ; et
- un circuit d'accès réception du réseau de transfert de paquets (ARRTP)
  à une entrée de chaque module de recherche de chemin (MRCH) recevant
  le signal d'adresses des mailles à libérer (AMAL) qui permet audit
  module de recherche de chemin (MRCH) de mettre à jour les états de
  disponibilité des mailles correspondantes de la matrice de transfert du
  second étage (S2) à laquelle il est associé.

8. Commutateur de paquets asynchrone selon la revendication 7,
caractérisé en ce que chaque module de recherche de chemin (MRCHO à
MRCH31) comporte :
- un circuit de recherche de chemin (CRCH) établissant, si possible, un
  chemin dans le réseau de transfert de paquets (RTP) ;
- un registre d'adresses d'extrémités à connecter (RAEAC) donnant
  lesdites adresses au circuit de recherche de chemin ;
- une file d'attente (FAAEAC) stockant les adresses d'extrémités à
  connecter qui proviennent des circuits sortants ; et
- un registre de nouvelles adresses d'extrémités à connecter (RNAEAC)
  contenant les prochaines adresses d'extrémités à connecter,
et en ce que tous les modules de recherche de chemin fonctionnent en même
temps et transmettent au suivant, soit le contenu du registre d'adresses
d'extrémités à connecter (RAEAC) si aucun chemin n'a été trouvé, soit le
contenu du registre de nouvelles demandes (RNAEAC) si un chemin a été
trouvé.

9. Commutateur de paquets asynchrone selon la revendication 8,
caractérisé en ce que chaque circuit de recherche de chemin (CRCHi)
comporte :
- deux registres de disponibilité de mailles (DISPMAi, DISPMBi) contenant
  les bits de disponibilité des mailles associées à chaque groupe de
  mémoires paquets (GMP) et des mailles associées à chaque groupe de
  circuits sortants (GCS) connectées à la matrice de 1'étage intermédiaire
  du réseau de transfert de paquets (RTP) associée audit circuit de
  recherche de chemin ;

- deux multiplexeurs (MXAi, MXBi), commandés par une partie adresse de groupe de mémoires paquets (GMP) et une partie adresse de groupe de circuits sortants (GCS) du signal d'adresses d'extrémités à connecter (AEAC), sélectionnant les bits de disponibilité des mailles à la sortie des deux registres de disponibilité de mailles (DISPMAi, DISPMBi) ;

- une porte logique "ET" (4i), connectée à la sortie de chacun des multiplexeurs, donnant le signal de chemin trouvé (CHTi) ou non;

- un bistable (B), dont l'entrée est reliée à la sortie de la porte logique "ET" (4i), enregistrant le signal de chemin trouvé (CHTi) ou non ;

- deux démultiplexeurs (DMXAi, DMXBi), commandés de la même façon que les multiplexeurs, envoyant le résultat du bistable (B) dans les registres de disponibilité de mailles (DISPMAi, DISPMBi) et mettant à jour les bits de disponibilité des mailles correspondantes ; et

- un circuit de préparation d'adresse de chemin à connecter (PRACHAC) recevant le signal d'adresses d'extrémités à connecter et le signal de sortie du bistable (B) et délivrant le signal d'adresse de chemin à connecter (ACHAC).

FIG. 1

0183592

FIG. 2

2/16

0183592

GCE31

LE7

LE0

I07
I00
I17
I10

GCE0

CE7

CE0

LE7

LE0

CRL

LAR

ASO

I07

I00

I17

I10

GCES31

GCEE31

SCCE

CCE7

CCE0

GCES0

GCEE0

FIG. 3

FIG. 4

0183592

FIG. 5

0183592

FIG. 6

FIG. 7.a

FIG. 7.b

FIG. 7.c

FIG. 7.d

8/16

0183592

FIG. 8.a

FIG. 8.b

FIG. 8.c

FIG. 8.d

FIG. 9

9/16

0183592

FIG. 10

FIG. 11

FIG. 12

FIG. 13

FIG. 14

FIG. 15

0183592

FIG. 16

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A,D | FR-A-2 513 472 (L.C.T.)<br>* Page 2, ligne 31 - page 3, ligne 6; page 5, lignes 7-29; page 6, ligne 26 - page 9, ligne 3 * | 1-9 | H 04 L 11/20 |
| | --- | | |
| A,D | FR-A-2 478 911 (L.C.T.)<br>* Page 2, lignes 8-37; page 9, ligne 4 - page 18, ligne 8 * | 1-9 | |
| | --- | | |
| A | WO-A-8 401 868 (WESTERN ELECTRIC)<br>* Page 12, ligne 4 - page 16, ligne 25; page 17, ligne 5 - page 22, ligne 30; page 36, ligne 26 - page 38, ligne 20; page 40, ligne 26 - page 43, ligne 18; page 60, ligne 36 - page 62, ligne 4; page 86, ligne 19 - page 90, ligne 6 * | 1-9 | |
| | | | DOMAINES TECHNIQUES RECHERCHES (Int. Cl.4) |
| | --- | | |
| A | FR-A-2 310 051 (L.M.T.) | | H 04 L<br>H 04 Q |
| | --- | | |
| A | IEEE INTERNATIONAL CONFERENCE ON COMMUNICATIONS, vol. 3, session 3, 13-17 juin 1982, pages 5C.3.1-5C.3.5, IEEE, Philadelphia, US; FUKUYA ISHINO et al.: "A high throughput packet switching system" | | |
| | ----- | | |

Le présent rapport de recherche a été établi pour toutes les revendications

| Lieu de la recherche | Date d'achèvement de la recherche | Examinateur |
|---|---|---|
| LA HAYE | 13-02-1986 | GERLING J.C.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82